# EUROPEAN PATENT APPLICATION

(11) **EP 3 879 596 A1**
(43) Date of publication of application: **15.09.2021**
(21) Application number: 20193356.1
(22) Date of filing: 28.08.2020
(51) Int. Cl.: H01M 4/04, H01M 4/131, H01M 4/1391, H01M 4/36, H01M 4/485, H01M 4/62, H01M 10/0567

(54) **NEGATIVE ELECTRODE, SECONDARY BATTERY, BATTERY PACK, AND VEHICLE**

(30) Priority: 11.03.2020 JP 2020041693
(71) Applicant: KABUSHIKI KAISHA TOSHIBA, Minato-ku Tokyo 105-0023 (JP)
(72) Inventor: Fukaya, Taro, Tokyo, 105-0023 (JP); Hoshina, Keigo, Tokyo, 105-0023 (JP); Harada, Yasuhiro, Tokyo, 105-0023 (JP); Takami, Norio, Tokyo, 105-0023 (JP)
(74) Representative: Hoffmann Eitle

(57) **Abstract**

According to one approach, a negative electrode is provided. The negative electrode includes a negative electrode active material-containing layer including a niobium titanium composite oxide and a sulfur-containing coating. Spectral data obtained by X-ray photoelectron spectroscopy on the surface of the negative electrode active material-containing layer includes a first peak with a peak top existing in the range of 208 eV to 210 eV and a second peak with a peak top existing in the range of 160 eV to 165 eV. The ratio (P2/P1) of the peak height P2 of the second peak to the peak height PI of the first peak falls within the range of 0.05 to 2.

## Description

### FIELD

The present disclosure relates generally to a negative electrode, a secondary battery, a battery pack, and a vehicle.

### BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well.

Commercialized nonaqueous electrolyte secondary batteries include, for example, a secondary battery that uses a lithium-transition metal composite oxide containing Co, Mn, Ni, or the like as a positive electrode active material, and a carbonaceous material or a titanium-containing oxide as a negative electrode active material.

It is known that as the secondary battery is repeatedly used, the positive electrode active material or the negative electrode active material is deteriorated, thereby progressive deteriorating the secondary battery, such as a decrease in capacity. For example, the reaction between the active material and an electrolytic solution may be one cause of the deterioration. Methods for inhibiting this reaction include, for example, a technique of forming a coating on the surface of the active material, such that the coating prevents the decomposition (side reaction) of the electrolytic solution to suppress the deterioration of the battery characteristics. Conventionally, there has been a demand for a secondary battery capable of suppressing deterioration of battery characteristics even in high-temperature environments.

### BRIEF DESCRIPTION OF THE DRAWINGS

FIG. 1 is a cross-sectional view schematically illustrating an example of a secondary battery according to an approach;
FIG. 2 is an enlarged cross-sectional view of a part A of the secondary battery shown in FIG. 1;
FIG. 3 is a partially cutaway perspective view schematically illustrating another example of the secondary battery according to the approach;
FIG. 4 is an enlarged cross-sectional view of a part B of the secondary battery shown in FIG. 3;
FIG. 5 is a perspective view schematically illustrating an example of a battery module according to an approach;
FIG. 6 is an exploded perspective view schematically illustrating an example of a battery pack according to an approach;
FIG. 7 is a block diagram illustrating an electrical circuit of the battery pack shown in FIG. 6;
FIG. 8 is a partially transparent view schematically illustrating an example of a vehicle according to an approach;
FIG. 9 is a diagram schematically illustrating an example of a control system for an electric system in the vehicle according to the approach;
FIG. 10 is spectral data showing first peaks according to an example and a comparative example; and
FIG. 11 is spectral data showing second peaks according to the example and the comparative example.

### DETAILED DESCRIPTION

According to an approach, a negative electrode is provided. The negative electrode includes a negative electrode active material-containing layer including a niobium titanium composite oxide and a sulfur-containing coating. Spectral data obtained by X-ray photoelectron spectroscopy on the surface of the negative electrode active material-containing layer includes a first peak with a peak top existing in the range of 208 eV to 210 eV and a second peak with a peak top existing in the range of 160 eV to 165 eV. The ratio (P2/P1) of the peak height P2 of the second peak to the peak height P1 of the first peak falls within the range of 0.05 to 2.

According to another approach, a secondary battery including a negative electrode according to the an approach, a positive electrode, and an electrolyte is provided.

According to another approach, a battery pack is provided. The battery pack includes the secondary battery according to the approach.

According to another approach, a vehicle is provided. The vehicle includes the battery pack according to the approach.

According to at least one of the approaches described above, it is possible to provide a negative electrode that can exhibit excellent life characteristics in a high temperature environment.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in a device actually used, but they can be appropriately design-changed considering the following explanations and known technology.

### (First Approach)

According to a first approach, a negative electrode is provided. The negative electrode includes a negative electrode active material-containing layer including a niobium titanium composite oxide and a sulfur-containing coating. Spectral data obtained by X-ray photoelectron spectroscopy on the surface of the negative electrode active material-containing layer includes a first peak with a peak top existing in the range of 208 eV to 210 eV and a second peak with a peak top existing in the range of 160 eV to 165 eV. The ratio (P2/P1) of the peak height P2 of the second peak to the peak height P1 of the first peak falls within the range of 0.05 to 2.

Techniques are known in which, in order to inhibit side reactions between the electrolytic solution and electrode included in the secondary battery, a protective coating is formed on the surface of the electrode, for example, the surface of an electrode active material-containing layer. The battery life can be improved by inhibiting the side reactions. In the case where the thickness and uniformity of the protective coating are insufficient, the electrolytic solution and the electrolyte salt are decomposed, thereby generating gas, which tends to degrade the life characteristics of the secondary battery, although the tendency changes depending on the composition of the protective coating. Furthermore, in the case where the protective coating is excessively thick, the problem of increasing the resistance typically arises, thereby degrading the input/output characteristics, which tends to, as a result, decrease the capacity.

The inventors have found that, in the case where the spectral data obtained by X-ray photoelectron spectroscopy (XPS: X-ray Photoelectron Spectroscopy) on the surface of the negative electrode active material-containing layer includes the first peak that with a peak top existing in the range of 208 eV to 210 eV and the second peak with a peak top existing in the range of 160 eV to 165 eV, and where the ratio (P2/P1) of the peak height P2 of the second peak to the peak height P1 of the first peak falls within the range of 0.05 to 2, even under high-temperature environments, side reactions between the electrolytic solution and the negative electrode can be inhibited to suppress the gas generation.

According to the XPS on the surface of the negative electrode active material-containing layer containing the niobium titanium composite oxide, in the case where the above-mentioned conditions are satisfied, a coating containing a sulfur (S) element can be considered formed on at least a part of the negative electrode active material-containing layer. Incidentally, the XPS procedure will be described in detail later.

The second peak with a peak top existing in the range of 160 eV to 165 eV is a peak derived from S²⁻ ions. More specifically, the position of the peak top of the second peak can fall within the numerical range. The second peak is a peak detected in, for example, S2P spectral data. Although the details have not been clarified, a S element with a bonding state in a S²⁻ ion state is included in the coating in which the second peak appears. For example, the S element contained in the coating is considered at least partially present as S²⁻ions, for example, as a compound such as a metal sulfide. The coating containing the S element represented by S²⁻ is hardly found in carbon-based negative electrodes.

This coating is considered produced, for example, by a reaction between the metal ions present in the electrolyte and the sulfur-containing compound included in the electrolyte at the surface of the negative electrode active material-containing layer. Examples of metal ions are nickel, cobalt and manganese which can be included in the positive electrode, or niobium included in the negative electrode. The niobium included in the negative electrode can be the niobium included in the niobium titanium composite oxide included in the negative electrode active material. For example, the niobium included in the negative electrode active material is eluted into the electrolyte during charge/discharge. Thus, the metal sulfide (S²⁻ ions) that causes the second peak to appear can be a compound containing sulfur and niobium. The coating film in such a form at least partially covers the negative electrode active material surface, thereby the active material surface is modified, and the reaction between the active material and the electrolyte to be inhibited. As a result, the gas generation can be suppressed, and excellent life characteristics can be exhibited even in a high-temperature environment. The high-temperature environment is, for example, an environment at 45°C to 80°C.

The first peak with a peak top existing in the range of 208 eV to 210 eV is a peak derived from Nb⁵⁺ ions. More specifically, the position of the peak top of the first peak can fall within the numerical range. The first peak derived from Nb⁵⁺ ions is a peak detected, for example, in Nb3d spectral data of.

If the ratio (P2/P1) of the peak height P2 of the second peak with a peak top existing in the range of 160 eV to 165 eV to the peak height P1 of the first peak with a peak top existing in the range of 208 eV to 210 eV exceeds 2, the excessively thick coating tends to increase the resistance excessively, which is not preferred. On the other hand, if the ratio (P2/P1) is less than 0.05, the coating tends to be excessively thin, and there is a possibility that the side reaction between the electrolytic solution and the electrode (negative electrode) can be insufficiently inhibited. The ratio (P2/P1) of the peak height P2 of the second peak to the peak height P1 of the first peak preferably falls within the range of 0.10 to 1.5, more preferably within the range of 0.30 to 1.0.

The absolute value of the peak height for each peak varies depending on the conditions of the electrode and apparatus, but falls within the following range as an example. The peak height of the first peak falls, for example, within the range of 300 c/s (count per second) to 10000 c/s, preferably within the range of 500 c/s to 8000 c/s. If the peak height of the first peak is excessively large, any sufficient coating will not be formed on the active material surface, and the effect of suppressing the gas generation tends to be small. If the peak height of the first peak is excessively small, an excessive coating will be formed, and the gas generation will be suppressed, but the resistance tends to be increased.

The peak height of the second peak is, for example, within the range of 100 c/s to 10000 c/s, preferably within the range of 300 c/s to 8000 c/s. If the peak height of the second peak is excessively large, an excessive coating will be formed, and the gas generation will be suppressed, but the resistance tends to be increased. If the peak height of the second peak is excessively small, any sufficient coating will not be formed on the active material surface, and the effect of suppressing the gas generation tends to be small.

The above-mentioned coating containing the sulfur element can contain a S element with a bonding state in a SOx state. For example, the coating may further include sulfur oxides. The XPS spectral data on the coating containing sulfur oxides can include peaks derived from SOx. The peaks derived from SOx are detected at positions of 166 eV to 170 eV, for example. In the case where XPS spectral data for the negative electrode active material-containing layer includes a peak derived from SOx, when the negative electrode active material is an oxide-based active material, it is assumed that a part of this active material and a sulfur element are react to undergo modification, and inhibit the activity at the active material surface, thereby suppressing the gas generation.

The negative electrode according to the approach can include a negative electrode current collector. The negative electrode active material-containing layer can be formed on one side or both sides of the negative electrode current collector. The negative electrode active material-containing layer can include negative electrode active material particles, and optionally, a conductive agent and a binder. The negative electrode according to the approach is, for example, a negative electrode for a secondary battery or a negative electrode for a nonaqueous electrolyte secondary battery. Of the surface of the negative electrode active material-containing layer, the surface subjected to the XPS measurement is not the surface on the side with the negative electrode active material-containing layer in contact with the current collector, but can be the surface on the side with the negative electrode active material-containing layer out of contact with the current collector.

For the negative electrode current collector, a material is used which is electrochemically stable at an electric potential at which allowing lithium (Li) to be inserted into and extracted from the active material. The negative electrode current collector is preferably made from, for example, copper, nickel, stainless steel or aluminum, or an aluminum alloy containing one or more elements selected from Mg, Ti, Zn, Mn, Fe, Cu, and Si. The thickness of the negative electrode current collector is preferably 5 µm or more and 20 µm or less. The negative electrode current collector with such a thickness can achieve a balance between the strength and reduction in weight for the negative electrode.

Furthermore, the negative electrode current collector can include a part where the surface thereof has no negative electrode active material-containing layer formed. This part can act as a current collecting tab.

The negative electrode active material particles contain a niobium titanium composite oxide. The negative electrode active material particles can include a negative electrode active material composite including: active material particles containing a niobium titanium composite oxide; and a sulfur-containing coating that covers at least a part of the active material particles.

The crystal structure of the niobium titanium composite oxide can be, for example, a monoclinic type. When the negative electrode active material particles contain a monoclinic niobium titanium composite oxide, high rate performance can be achieved in addition to an excellent energy density. The reason for this will be described by taking Nb₂TiO₇, which is a kind of monoclinic niobium-titanium composite oxide, as an example. A crystal structure of Nb₂TiO₇ has a large equivalent insertion space for lithium ions and is structurally stable. Furthermore, there are regions having a two-dimensional channel in which lithium ions diffuse rapidly and a conductive path in a [001] direction, connecting between the regions. As a result, in the crystal structure of the monoclinic niobium-titanium composite oxide Nb₂TiO₇, insertion/extraction property of the lithium ions into an insertion space is improved and an insertion/extraction space of the lithium ions is effectively increased. As a result, it is possible to provide high capacity and high rate performance.

The niobium-titanium composite oxide is, for example, at least one selected from the group consisting of a composite oxide represented by General Formula LiₓTi_{1-y}M1_{y}Nb_{2-z}M2_{z}O_{7+δ}, and a composite oxide represented by General Formula LiₓTi_{1-y}M3_{y+z}Nb_{2-z}O_{7-δ}. Here, M1 is at least one selected from the group consisting of Zr, Si, and Sn. M2 is at least one selected from the group consisting of V, Ta, and Bi. M3 is at least one selected from the group consisting of Mg, Fe, Ni, Co, W, Ta, and Mo. Each subscript in the composition formula satisfies 0 ≤ x ≤ 5, 0 ≤ y < 1, 0 ≤ z < 2, and -0.3 ≤ δ ≤ 0.3.

Specific examples of the niobium-titanium composite oxides include Nb₂TiO₇, Nb₂Ti₂O₉, Nb₁₀Ti₂O₂₉, Nb₁₄TiO₃₇, and Nb₂₄TiO₆₂. The niobium-titanium composite oxide may be a substituted niobium-titanium composite oxide in which at least a part of Nb and/or Ti is substituted with a dopant. Examples of substitution elements are Na, K, Ca, Co, Ni, Si, P, V, Cr, Mo, Ta, Zr, Mn, Fe, Mg, B, Pb, and Al. The substituted niobium-titanium composite oxide may include one kind or two or more kinds of the substitution elements.

In the niobium titanium composite oxide, the element ratio between niobium and the other elements may deviate from the theoretical value with respect to the above-described general formula or composition formula. For example, the amount of niobium is preferably larger in comparison between the theoretical values of niobium and other elements. In this case, niobium ions are eluted from the negative electrode into the electrolyte during initial charge, thereby making it easy to uniformly form a sulfur-containing coating on the negative electrode surface. Thus, such a negative electrode tends to have excellent life characteristics in a high-temperature environment.

The negative electrode active material particles can include another active material, besides the niobium titanium composite oxide. As the other active material, the negative electrode active material particles include active material particles containing the niobium titanium composite oxide, for example, in a proportion of 70% by mass or more, preferably in a proportion of 90% by mass or more. The negative electrode active material particles may contain only the niobium titanium composite oxide as an active material.

Examples of other active materials include lithium titanate having a ramsdellite structure (for example, Li_{2+y}Ti₃O₇, 0 ≤ y ≤ 3), lithium titanate having a spinel structure (for example, Li₄₊ₓTi₅O₁₂, 0 ≤ x ≤ 3), monoclinic titanium dioxide (TiO₂), anatase titanium dioxide, rutile titanium dioxide, hollandite titanium composite oxide, and orthorhombic titanium composite oxide.

Examples of the orthorhombic titanium-containing composite oxide include a compound represented by Li₂₊ₐM(I)_{2-b}Ti_{6-c}M(II)_{d}O_{14+σ}. Here, M(I) is at least one selected from the group consisting of Sr, Ba, Ca, Mg, Na, Cs, Rb, and K. M(II) is at least one selected from the group consisting of Zr, Sn, V, Nb, Ta, Mo, W, Y, Fe, Co, Cr, Mn, Ni and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂Ti₆O₁₄ (0 ≤ a ≤ 6) .

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, and graphite. One of these may be used as the electro-conductive agent, or two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed active material and also to bind the active material with the negative electrode current collector. Examples of the binder include polytetrafluoroethylene (PTFE), polyvinylidene fluoride (PVdF), fluorine rubber, styrenebutadiene rubber, polyacrylate compounds, imide compounds, carboxymethyl cellulose (CMC), and salts of CMC. One of these may be used as the binder, or two or more may be used in combination as the binder.

The mixing ratios of the active material particles, conductive agent, and the binder in the negative electrode active material-containing layer can be appropriately changed depending on the application of the electrode. The negative electrode active material-containing layer preferably includes therein the active material particles, the conductive agent, and the binder respectively in proportions of 70% by weight or more and 96% by weight or less, 2% by weight or more and 28% by weight or less, and 2% by weight or more and 28% by weight or less. The amount of the conductive agent is adjusted to 2% by weight or more, thereby allowing the current collecting performance of the negative electrode active material-containing layer to be improved, and the large current characteristics of the secondary battery to be improved. Furthermore, the amount of the binder is adjusted to 2% by weight or more, thereby allowing the binding property between the negative electrode active material-containing layer and the current collector to be enhanced, and the cycle characteristics to be improved. On the other hand, the conductive agent and the binder are preferably each 28% by weight or less for achieving increase in capacity.

The form of the negative electrode active material particles according to the approach is not particularly limited. The negative electrode active material particles may take the form of, for example, primary particles, or may take the form of secondary particles that have primary particles aggregated. The negative electrode active material particles may be a mixture of primary particles and secondary particles.

The negative electrode active material particles may have a carbon-containing layer as a layer present inside the sulfur-containing coating. The carbon-containing layer may be included in primary particles, or may be included in secondary particles. Alternatively, the negative electrode active material particles may include secondary particles of aggregated primary particles including a carbon-containing layer inside the sulfur-containing coating. Such secondary particles can exhibit excellent conductivity, because carbon is present between primary particles. The aspect including such secondary particles is preferred, because the negative electrode active material-containing layer can exhibit lower resistance.

Whether the negative electrode active material particles are secondary particles or primary particles can be determined by observation with a scanning electron microscope (SEM: Scanning Electron Microscopy). Furthermore, the average primary particle diameter and average secondary particle diameter of the active material particles can be measured by SEM observation.

The average particle diameter (D₅₀) of the negative electrode active material particles falls within, for example, the range of 0.1 µm to 50 µm. The average particle size can be changed depending on the required battery characteristics. For example, the average particle size is preferably adjusted to 1.0 µm or less in order to enhance the rapid charge/discharge performance. This adjustment allows the diffusion distance of lithium ions in the crystal to be reduced, thus allowing the rapid charge/discharge performance to be enhanced. The average particle diameter can be determined by, for example, a laser diffraction method. The average particle diameter means, for example, a median diameter d50 determined by a laser diffraction scattering method.

The average primary particle diameter of the negative electrode active material particles is not particularly limited, but is, for example, preferably 0.05 µm or more and 2 µm or less, more preferably 0.2 µm or more and 1 µm or less. The average secondary particle diameter of the negative electrode active material particles is not particularly limited, but is, for example, preferably 1 µm or more and 20 µm or less, more preferably 3 µm or more and 10 µm or less.

The BET (Brunauer, Emmett, Teller) specific surface area of the active material according to the approach is not particularly limited. The BET specific surface area is, however, preferably 1 m²/g or more and 20 m²/g or less, more preferably 2 m²/g or more and 10 m²/g or less.

When the specific surface area is 1 m²/g or more, the contact area with the electrolyte can be secured, favorable discharge rate characteristics are likely to be obtained, and the charging time can be shortened. On the other hand, when the specific surface area is 20 m²/g or less, the reactivity with the electrolyte is not excessively increased, and the life characteristics can be improved. Furthermore, the coatability of slurry containing the active material, for use in the electrode manufacture described later, can be made favorable.

In this regard, the measurement of the specific surface area uses a method of adsorbing molecules that have an adsorption occupied area known on powder particle surfaces at the temperature of liquid nitrogen, and determining the specific surface area of the sample from the quantity of the molecules. The most frequently used method is the BET method with physical adsorption of an inert gas at low temperature and low humidity, which is the most famous theory as a method for calculating the specific surface area, as a result of extending the Langmuir theory, which is a monolayer adsorption theory, to multilayer adsorption. The specific surface area thus obtained is referred to as a BET specific surface area.

The density of the negative electrode active material-containing layer (excluding the current collector) is preferably 1.8 g/cm³ or more and 3.0 g/cm³ or less. The negative electrode in which the density of the negative electrode active material-containing layer falls within this range is excellent in energy density and electrolyte retention. The density of the negative electrode active material-containing layer is more preferably 2.1 g/cm³ or more and 2.8 g/cm³ or less.

### <Measurement by X-ray Photoelectron Spectroscopy (XPS)>

The negative electrode put into a state of discharge in accordance with the following procedure is subjected to measurement by the X-ray photoelectron spectroscopy. In this regard, the state of discharge means, in the case of a battery, a state after discharging the battery in accordance with the recommended charge-and-discharge specifications of the battery. However, the state of discharge of the battery herein encompasses states where the SOC of the battery falls within the range of 0% to 30%.

In the case of removing the negative electrode for discharge, the state of discharge means a state after discharge as follows. First, the negative electrode removed from the battery is cleaned with, for example, a chain carbonate solvent such as ethylmethyl carbonate, to remove a Li salt, etc., and then dried. Next, a three-electrode electrochemical cell is created with the use of the dried negative electrode as a working electrode, and a lithium metal as a counter electrode and a reference electrode. In this regard, an electrolyte for the three-electrode electrochemical cell is not particularly limited, and for example, a solution in which 1 mol/L lithium hexafluorophosphate (LiPF₆) is dissolved in a mixed solvent of ethylene carbonate and methylethyl carbonate of 1 : 1 in volume ratio may be used.

The cell thus prepared is discharged until the electric potential of the working electrode reaches an electric potential corresponding to the discharge state of the battery, and is regarded as the negative electrode in the discharge state.

For an apparatus for use in the measurement, Quantera SXM manufactured by Ulvac-PHI, or an apparatus that has a function equivalent thereto can be used. The Al-Kα line obtained by single-crystal spectroscopy (1486.6 eV) is used for an excited X-ray source. The photoelectron detection angle is adjusted to 45°.

The negative electrode brought into the state of discharge is taken in an argon atmosphere, and cleaned with, for example, methylethyl carbonate to remove a Li salt attached to the negative electrode surface. The negative electrode subjected to the Li salt removal is dried, and then mounted on a sample holder, and the active material-containing layer surface is subjected to the measurement. The sample is loaded under an inert atmosphere, for example, a nitrogen atmosphere.

In the spectral data obtained by this measurement, whether the first peak and the second peak appear is determined. To that end, first, with two points of start and end points taken for each peak, the intensity is standardized by the Shirley method to draw a line segment to serve as a baseline. In this regard, the difference in height between the start point and end point of each peak is defined as the noise width of the baseline. Next, the peak height from the baseline to the peak top is calculated at a position where each peak is maximum of the binding energy, that is, at the peak top position. In the specification and the claims, a peak is regarded as detected, in the case where the calculated peak height is three times or more as large as the noise width of the baseline. It is possible, however, to calculate the ratio P2/P1 even in the case where the peak height of each peak is less than three times the noise width of the baseline.

### <Powder X-ray diffraction>

The crystal structure of the niobium-titanium composite oxide in the active material particles can be confirmed by powder X-ray diffraction (XRD). As an apparatus for powder X-ray diffraction measurement, for example, SmartLab manufactured by Rigaku Corporation or an apparatus having an equivalent function is used. The measurement conditions are as follows:
X-ray source: Cu target
Output: 45 kV 200 mA
Solar slit: 5° for both incident and reception
Step width (2θ): 0.02 deg
Scan speed: 20 deg/min
Semiconductor detector: D/teX Ultra 250
Sample plate holder: Flat glass sample plate holder (thickness 0.5 mm)
Measurement range: 5° ≤ 2θ ≤ 90°

### <Method for Manufacturing Negative Electrode>

The negative electrode according to the approach can be manufactured, for example, by applying initial charge and post-treatment under specific conditions to a secondary battery manufactured by the following method.

First, a secondary battery including: an electrode group including a negative electrode, a positive electrode, and a separator; and an electrolyte is prepared in accordance with the following procedure. Incidentally, the details of the positive electrode, separator, and electrolyte will be described later.

The negative electrode is prepared, for example, by the following method. First, the negative electrode active material, the conductive agent, and the binder described above are suspended in a solvent to prepare a slurry. This slurry is applied to one or both sides of the current collector. Then, the applied slurry is dried to obtain a laminate of the negative electrode active material-containing layer and the current collector. Thereafter, this laminate is subjected to pressing. In this way, the negative electrode is prepared.

Alternatively, the negative electrode may be produced by the following method. First, the negative active material particles, the conductive agent, and the binder are mixed to obtain a mixture. The mixture is then formed into pellets. Subsequently, the negative electrode can be obtained by arranging these pellets on the current collector.

The positive electrode is prepared by the method described in a second approach described later. Furthermore, as the separator, for example, the separator described in the second approach is prepared. The electrode group is prepared by using of the prepared negative electrode, positive electrode, and separator.

Although the approach of the electrode group is not particularly limited, the electrode group is produced, for example, by stacking the negative electrode and the positive electrode with the separator interposed therebetween, winding this stack, and further pressing the wound body.

Next, the electrolyte is prepared in accordance with the following procedure. In this regard, a nonaqueous electrolyte is used as the electrolyte. Although the details of the electrolyte will be described in the second approach, the nonaqueous electrolyte can be prepared by, firstly, dissolving an electrolyte salt in an organic solvent to prepare an electrolytic solution, and then adding a sulfur-containing compound described later to the electrolytic solution.

Next, the previously prepared electrode group and nonaqueous electrolyte are put into a container member to prepare a battery.

Subsequently, the battery is subjected to initial charge. The initial charge is performed until the electric potential of the negative electrode reaches 0.5 to 1.6 V (vs. Li/Li⁺). Thereafter, with the state of charge (SOC) of the battery from 75% to 100%, the battery is left under a temperature environment at 60°C to 90°C, and subjected to post-treatment over 6 hours to 36 hours. The post-treatment is so-called aging.

The battery is subjected to the post-treatment followed by the initial charge, thereby making it possible to prepare a negative electrode including a coating that shows spectral data such that the above-mentioned ratio (P2/P1) falls within the range of 0.05 to 2. Niobium ions are eluted into the nonaqueous electrolyte from the surface of the niobium titanium composite oxide contained in the negative electrode active material, and the niobium ions react with the sulfur-containing compound on the negative electrode active material surface, thereby forming the sulfur-containing coating according to the approach. In this way, the negative electrode with the negative electrode active material surface modified can achieve a secondary battery which is excellent in life characteristics at high temperatures. In the case of only the initial charge, a coating containing S²⁻ ions is insufficiently formed, and the ratio (P2/P1) is less than 0.05. Note that the electrolyte may include the sulfur-containing compound or include no sulfur-containing compound, as long as the battery includes the negative electrode with the above-mentioned coating formed. Furthermore, as long as the negative electrode active material contains the niobium titanium composite oxide, it is not necessary to separately add niobium ions into the electrolyte, but niobium ions may be added thereto.

In order to form the coating that shows spectral data such that the above-mentioned ratio (P2/P1) falls within the range of 0.05 to 2, the SOC of the battery during the above-described post treatment is preferably 100%. It is preferable to increase the treatment time with the decrease in SOC from 100%. There is a possibility that the low SOC or the short treatment time may lead to a thinner coating formed, thereby making the ratio (P2/P1) less than 0.05. Furthermore, it is preferable to increase the treatment temperature, because the coating is easily formed. The excessively high treatment temperature has, however, the disadvantage that the electrode is degraded due to thermal degradation of the binder, the electrolyte, the separator, and the like. Moreover, there is a possibility that the excessively long treatment time may make the coating excessively thick, thereby making the ratio (P2/P1) in excess of 2. In such a case, the battery resistance is excessively increased, which is not preferred. It is more preferable to set the conditions for the above-mentioned post treatment such that the SOC of the battery to be treated is 90% to 100%, the temperature is 75°C to 85°C, and the treatment time falls within the range of 18 hours to 30 hours.

According to the first approach, a negative electrode is provided. The negative electrode includes a negative electrode active material-containing layer including a niobium titanium composite oxide and a sulfur-containing coating. Spectral data obtained by X-ray photoelectron spectroscopy on the surface of the negative electrode active material-containing layer includes a first peak with a peak top existing in the range of 208 eV to 210 eV and a second peak with a peak top existing in the range of 160 eV to 165 eV. The ratio (P2/P1) of the peak height P2 of the second peak to the peak height P1 of the first peak falls within the range of 0.05 to 2.

With this negative electrode, a secondary battery can be achieved which can exhibit excellent life characteristics in a high temperature environment.

### (Second Approach)

According to a second approach, a secondary battery including a negative electrode according to the first approach, a positive electrode, and an electrolyte is provided. The secondary battery can be, for example, a nonaqueous electrolyte secondary battery or a lithium-ion nonaqueous electrolyte secondary battery.

The secondary battery additionally can be equipped with a separator disposed between the positive electrode and the negative electrode. The negative electrode, the positive electrode, and the separator can constitute an electrode group. The electrolyte can be held in the electrode group.

The secondary battery additionally can be equipped with a container member that houses the electrode group and the electrolyte.

Furthermore, the secondary battery additionally can be equipped with a negative electrode terminal electrically connected to the negative electrode and a positive electrode terminal electrically connected to the positive electrode.

Hereinafter, the negative electrode, the positive electrode, the electrolyte, the separator, the container member, the negative electrode terminal, and the positive electrode terminal will be described in detail.

### (1) Negative Electrode

The negative electrode included in the secondary battery according to the second approach is the negative electrode described in the first approach. A sulfur-containing coating that is present on the surface of a negative electrode active material-containing layer is provided, for example, at a position opposed to a positive electrode active material-containing layer. The sulfur-containing coating may be provided on the entire surface of the negative electrode active material-containing layer.

### (2) Positive Electrode

The positive electrode can include a positive electrode current collector and a positive electrode active material-containing layer. The positive electrode active material-containing layer can be formed on one side or both sides of the positive electrode current collector. The positive electrode active material-containing layer can contain a positive electrode active material, and optionally a conductive agent and a binder. A positive electrode current collector can also include a part where the surface thereof has no positive electrode active material-containing layer formed. This part can act as a positive electrode tab.

Examples of the positive electrode active material include oxides and sulfides. The positive electrode may include, as the positive electrode active material, one type of compound or two or more different types of compounds. Examples of the oxides and the sulfides may include compounds allowing lithium or lithium ions to be inserted thereinto or extracted therefrom.

Examples of such compounds include manganese dioxides (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y < 1, and LiₓCoPO₄; 0 < x ≤ 1), iron sulfates [Fe₂(SO₄)₃], vanadium oxides (e.g., V₂O₅), and lithium nickel cobalt manganese composite oxides (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxides (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z},Co_{y}Mn_{z}O₂; 0 < x ≤ 1, 0 < y < 1, 0 < z < 1, y + z < 1). The positive electrode potential can be made high by using these positive electrode active materials.

In one preferred approach, the positive electrode active material contains a composite oxide represented by the general formula LiₓMO₂. In the above-mentioned general formula, M includes at least one selected from the group consisting of Ni, Co, and Mn. The positive electrode active material can contain, for example, LiₓCoO₂, LiNiO₂, Li₂Mn₂O₄, or LiₓNiₐCo_{b}Mn_{c}O₂ (a + b + c = 1). x in the above-mentioned general formula and composition formula can take a numerical value of 0 < x ≤ 1.

When a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The positive electrode active material may preferably have primary particle sizes in the range of 100 nm to 1 µm. The positive electrode active material having primary particle sizes of 100 nm or more may be easy to handle in industrial applications. The positive electrode active material having primary particle sizes of 1 µm or less may allow lithium ions to be smoothly diffused in solid.

The positive electrode active material may preferably have a specific surface area in the range of 0.1 m²/g to 10 m²/g. The positive electrode active material having a specific surface area of 0.1 m²/g or more may secure an adequately large site for insertion and extraction of Li ions. The positive electrode active material having a specific surface area of 10 m²/g or less may be easy to handle in industrial applications and may ensure a favorable charge-and-discharge cycle.

The specific surface area of the positive electrode active material can be measured by the BET method described above.

A binder is mixed to bind the positive electrode active material and a conductive agent. Examples of the binder include polytetrafluoroethylene (PTFE), polyvinylidene fluoride (PVdF), fluorine-based rubbers, polyacrylonitrile, and polyethylene oxide.

The conductive agent is added to enhance the current collecting performance of the positive electrode active material and inhibit the contact resistance with the positive electrode current collector. Examples of the conductive agent include acetylene black, carbon black, graphite, carbon fibers, graphene, carbon nanofibers, and fullerene. One of these examples may be used as a conductive agent, or two or more thereof may be used in combination as a conductive agent. Furthermore, the conductive agent can be omitted.

The proportions of the active material, conductive agent, and the binder included in the positive electrode active material-containing layer are preferably adjusted respectively to 80% by weight or more and 95% by weight or less, 3% by weight or more and 18% by weight or less, and 2% by weight or more and 17% by weight or less. The amount of the conductive agent is adjusted to 3% by weight or more, thereby making it possible to achieve the effect described above. The amount of the conductive agent, adjusted to 18% by weight or less, can reduce the decomposition of the electrolyte at the surface of the conductive agent under high-temperature storage. The amount of the binder, adjusted to 2% by weight or more, provides sufficient positive electrode strength. The amount of the binder, adjusted to 17% by weight or less, can reduce the amount of the binder mixed as an insulating material in the positive electrode, and reduce the internal resistance.

The positive electrode current collector is preferably an aluminum foil or an aluminum alloy foil containing one or more elements selected from Mg, Ti, Zn, Ni, Cr, Mn, Fe, Cu, and Si.

The thickness of the aluminum foil or aluminum alloy foil is preferably within a range from 5 µm to 20 µm, and is more preferably 15 µm or less. The purity of the aluminum foil is preferably 99% by mass or more. The content of transition metals such as iron, copper, nickel, and chromium contained in the aluminum foil or aluminum alloy foil is preferably 1% by mass or less.

It is preferably that the positive electrode includes, in a spectral data obtained by X-ray photoelectron spectroscopy (XPS) on the positive electrode active material-containing layer, a third peak with a peak top appearing in the range of 160 eV to 165 eV. In other words, the positive electrode active material-containing layer preferably includes a sulfur-containing coating. The XPS on the positive electrode active material-containing layer can be carried out in the same manner as the method described above for the negative electrode.

The third peak with a peak top appearing in the range of 160 eV to 165 eV may be a peak derived from S²⁻ ions. In the case where the spectral data obtained by XPS on the positive electrode active material-containing layer includes the third peak, side reactions between the electrolyte and the active material can be inhibited even in the positive electrode. Thus, in this case, better life characteristics can be achieved.

Incidentally, as described in the first approach, in the specification and the claims, a peak is regarded as appearing, in the case where the peak has a peak height that is 3 times or more as large as the noise width of the baseline.

The sulfur-containing coating covers, for example, at least some of positive electrode active material particles. The composition of the sulfur-containing coating that can be included in the positive electrode may be the same as or different from the sulfur-containing coating that is present in the negative electrode.

The positive electrode can be produced, for example, by the following method. First, an active material, a conductive agent, and a binder are suspended in a solvent to prepare a slurry. This slurry is applied to one side or both sides of the current collector. Next, the applied slurry is dried to obtain a laminate of the active material-containing layer and the current collector. Thereafter, the laminate is pressed. The positive electrode is thus produced.

Alternatively, the positive electrode may be produced by the following method. First, an active material, a conductive agent, and a binder are mixed to obtain a mixture. The mixture is then formed into pellets. Subsequently, these pellets can be arranged on the current collector to obtain a positive electrode.

In order to obtain the positive electrode (positive electrode active material-containing layer) that shows spectral data including the third peak, for example, as in the method for manufacturing the negative electrode described in the first approach, a secondary battery that includes the electrolyte including a sulfur-containing compound is prepared, and subjected to initial charge and subsequent post treatment.

### (3) Electrolyte

Examples of the electrolyte may include nonaqueous liquid electrolyte or nonaqueous gel electrolyte. The nonaqueous liquid electrolyte may be prepared by dissolving an electrolyte salt used as solute in an organic solvent. The electrolyte salt may preferably have a concentration in the range of 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); γ-butyrolactone (GBL), acetonitrile (AN), and sulfolane (SL). These organic solvents may be used singularly or as a mixed solvent.

The electrolyte may include the sulfur-containing compound, or may include no sulfur-containing compound. The electrolyte may contain niobium ions, or may include no niobium ions. The electrolyte includes, for example, sulfur-containing compound selected from at least one of a sultone compound, or imide compounds containing a sulfur atom.

The concentration of the sulfur-containing compound in the nonaqueous electrolyte is preferably 0.1% by weight to 3% by weight, more preferably 0.5% by weight to 1.5% by weight, with respect to the electrolytic solution. In the secondary battery according to the approach in which the concentration falls within the preferred range, the effect of suppressing gas generation while inhibiting an increase in negative electrode resistance due to further production of excessive coating.

The sultone compound is at least one selected from the group consisting of 1,3-propane sultone, 1,3-propene sultone, 1,4-butane sultone, and 2,4-butane sultone. The imide compound containing a sulfur atom is, for example, at least one selected from LiTFSI (lithium bis(trifluoromethanesulfonyl)imide) or LiFSI (lithium bis(fluorosulfonyl)imide). The sulfur-containing compound may include one selected from the group consisting of these compounds, or may include two or more in mixture.

In the case where the sulfur-containing coating included in the negative electrode active material-containing layer contains the S element derived from the imide compound, there is a tendency for a thinner coating to be formed as compared with a case of containing the S-element derived from the sultone compound. Thus, in the case where the coating contains the S element derived from the imide compound, the resistance value can be further lowered, which is preferred. As described previously, the electrolyte may include no sulfur-containing compound, but as one approach, in the case where the electrolyte includes the imide compound, a low-resistance secondary battery can be achieved as compared with the case where the electrolyte includes the sultone compound.

The preferred niobium ion concentration in the electrolyte is 0.01 mg/L to 300 mg/L, more preferably 1 mg/L to 100 mg/L.

The forms of niobium ions in the electrolyte include, for example, Nb⁵⁺, Nb⁴⁺ and Nb³⁺. The niobium ions contained in the electrolyte may be derived from, for example, a salt such as NbCl₅. In other words, a salt such as NbCl₅ may be dissolved in the electrolyte. If the niobium ion concentration in the electrolyte is excessively low during initial charge, there is a possibility that a coating containing S present in the bonding state of S²⁻ may be formed insufficiently, whereas if the niobium ion concentration is excessively high, the battery life may be decreased by disturbed charge/discharge in some cases.

The gel nonaqueous electrolyte is prepared by obtaining a composite of a liquid nonaqueous electrolyte and a polymeric material. Examples of the polymeric material include polyvinylidene fluoride (PVDF), polyacrylonitrile (PAN), polyethylene oxide (PEO), and mixtures thereof.

Alternatively, besides the nonaqueous liquid electrolyte and the nonaqueous gel electrolyte, a roomtemperature molten salt (ionic melt) containing lithium ions, a polymer solid electrolyte, an inorganic solid electrolyte, and the like may also be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

A polymer solid electrolyte is prepared by dissolving an electrolyte salt into a polymer material and solidifying the result.

An inorganic solid electrolyte is solid material having Li-ion conductivity.

The electrolyte may also be an aqueous electrolyte containing water.

The aqueous electrolyte includes an aqueous solvent and an electrolyte salt. The aqueous electrolyte is liquid, for example. A liquid aqueous electrolyte is an aqueous solution prepared by dissolving an electrolyte salt as the solute in an aqueous solvent. The aqueous solvent is a solvent containing 50% or more water by volume, for example. The aqueous solvent may also be pure water.

The aqueous electrolyte may also be an aqueous gel composite electrolyte containing an aqueous electrolytic solution and a polymer material. The polymer material may be, for example, polyvinylidene fluoride (PVDF), polyacrylonitrile (PAN), or polyethylene oxide (PEO).

The aqueous electrolyte preferably contains 1 mol or greater of aqueous solvent per 1 mol of the salt as the solute. In an even more preferably aspect, the aqueous electrolyte contains 3.5 mol or greater of aqueous solvent per 1 mol of the salt as the solute.

That the aqueous electrolyte contains water can be confirmed by gas chromatography - mass spectrometry (GC-MS) measurement. Also, the salt concentration and the amount of water contained in the aqueous electrolyte can be computed by measurement using inductively coupled plasma (ICP) emission spectroscopy or the like, for example. By measuring out a prescribed amount of the aqueous electrolyte and computing the contained salt concentration, the molar concentration (mol/L) can be computed. Also, by measuring the specific gravity of the aqueous electrolyte, the number of moles of the solute and the solvent can be computed.

The aqueous electrolyte is prepared by dissolving the electrolyte salt into the aqueous solvent at a concentration from 1 to 12 mol/L for example.

To suppress electrolysis of the aqueous electrolyte, LiOH, Li₂SO₄, or the like can be added to adjust the pH. The pH is preferably from 3 to 13, and more preferably from 4 to 12.

### (4) Separator

The separator is formed of, for example, a porous film containing polyethylene (polyethylene; PE), polypropylene (polypropylene; PP), cellulose, or polyvinylidene fluoride (PVdF), or a synthetic resin nonwoven fabric. From the viewpoint of safety, it is preferable to use a porous film formed from polyethylene or polypropylene. This is because these porous films can be melted at a predeterminedtemperature to interrupt the current.

### (5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member may be appropriately selected depending on battery size and use of the battery.

### (6) Negative Electrode Terminal

The negative electrode terminal can be formed from a material that is electrochemically stable at the Li insertion/extraction potential of the niobium titanium composite oxide contained in the negative electrode. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

### (7) Positive Electrode Terminal

The positive electrode terminal may be made of, for example, a material that is electrically stable in the potential range of 3 V to 5 V (vs. Li/Li⁺) relative to the redox potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the approach will be described in detail with reference to the drawings.

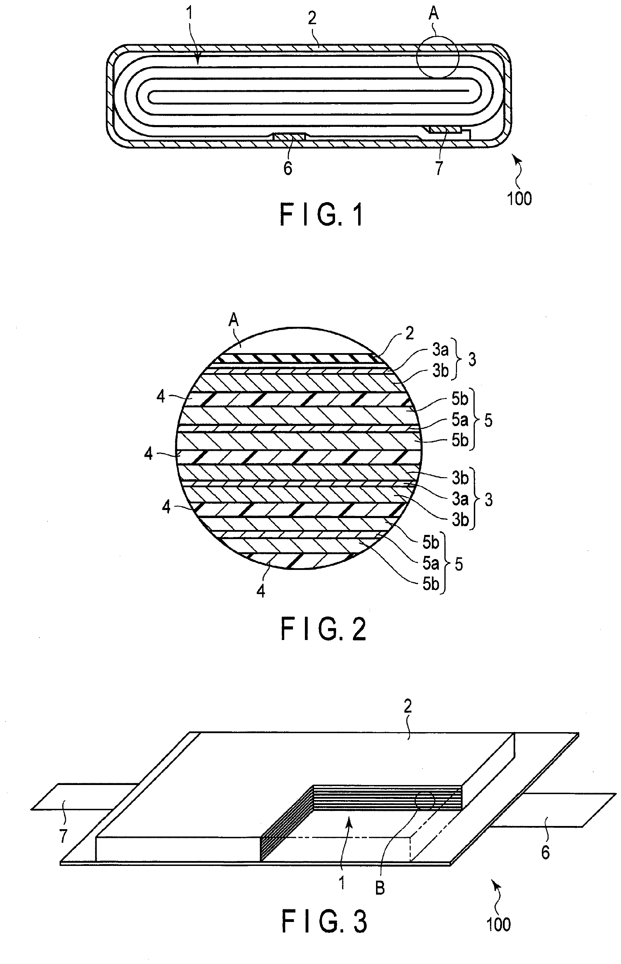

FIG. 1 is a sectional view schematically showing one example of a secondary battery according to an approach. FIG. 2 is an enlarged sectional view of a portion A of the secondary battery shown in FIG. 1.

The secondary battery 100 shown in FIG. 1 and FIG. 2 includes a bag-shaped container member 2 shown in FIG. 1, an electrode group 1 shown in FIG. 1 and FIG. 2, and an electrolyte (not shown). The electrode group 1 and the electrolyte are stored in the bag-shaped container member 2. The electrolyte (not shown) is held in the electrode group 1.

The bag-shaped container member 2 is formed from a laminate film including two resin layers and a metal layer disposed therebetween.

As shown in FIG. 1, the electrode group 1 is a flat wound electrode group. The flat wound electrode group 1 includes negative electrodes 3, separators 4, and positive electrodes 5 as shown in FIG. 2. The separator 4 is disposed between the negative electrode 3 and the positive electrode 5.

A negative electrode 3 includes a negative electrode current collector 3a and negative electrode active material-containing layers 3b. In the portion of the negative electrode 3 located at the outermost shell of a wound electrode group 1, the negative electrode active material-containing layer 3b is formed only on the inside surface side of the negative electrode current collector 3a, as shown in FIG. 2. In another portion of the negative electrode 3, the negative electrode active material-containing layer 3b is formed on both sides of the negative electrode current collector 3a.

A positive electrode 5 includes a positive electrode current collector 5a and a positive electrode active material-containing layer 5b formed on both sides thereof.

As shown in FIG. 1, a negative electrode terminal 6 and a positive electrode terminal 7 are positioned near the outer end of the wound electrode group 1. The negative electrode terminal 6 is connected to the outermost part of the negative electrode current collector 3a. In addition, the positive electrode terminal 7 is connected to the outermost part of the positive electrode current collector 5a. The negative electrode terminal 6 and the positive electrode terminal 7 extend outward from opening portions of the bag-shaped container member 2. A thermoplastic resin layer is provided on the inner surface of the bag-shaped container member 2, and the opening of the bag-shaped container member 2 are closed by thermal fusion bonding of the thermoplastic resin layer.

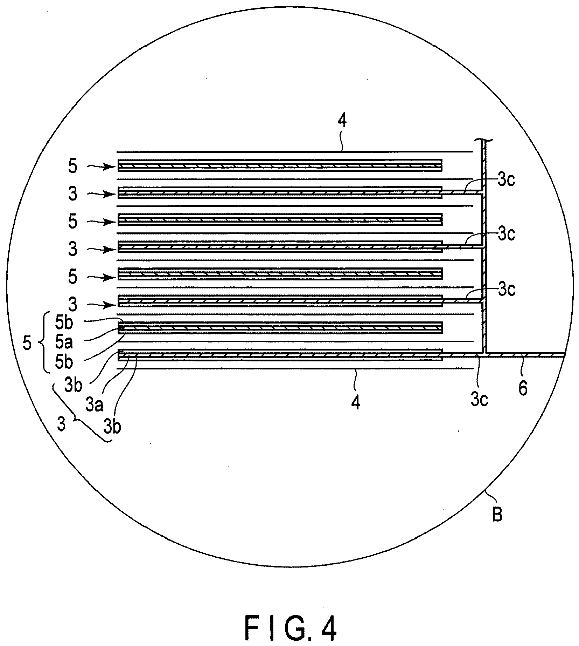

The secondary battery according to the approach is not limited to the secondary battery having the structure shown in FIGS. 1 and 2, and may be, for example, a battery having a structure shown in FIGS. 3 and 4.

FIG. 3 is a partial cut-away sectional perspective view schematically showing another example of the secondary battery according to the approach. FIG. 4 is an enlarged sectional view of a portion B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte (not shown). The electrode group 1 and the electrolyte are stored in the container member 2. The electrolyte is held in the electrode group 1.

The container member 2 is made of a laminate film including two resin layers and a metal layer intervening therebetween.

As shown in FIG. 4, the electrode group 1 is a laminated electrode group. The laminated electrode group 1 has a structure in which a negative electrode 3 and a positive electrode 5 are alternately laminated with a separator 4 intervening therebetween.

The electrode group 1 includes a plurality of the negative electrodes 3. The plurality of negative electrodes 3 are each provided with a negative electrode current collector 3a and a negative electrode active material-containing layer 3b carried on both sides of the negative electrode current collector 3a. Further, the electrode group 1 includes a plurality of the positive electrodes 5. The plurality of positive electrodes 5 are each provided with a positive electrode current collector 5a and a positive electrode active material-containing layer 5b carried on both sides of the positive electrode current collector 5a.

The negative electrode current collector 3a of each negative electrode 3 includes a portion 3c on one side where the negative electrode active material-containing layer 3b is not carried on any surfaces. This portion 3c acts as a negative electrode tab. As shown in FIG. 4, the portion 3c acting as the negative electrode tab does not overlap the positive electrode 5. In addition, a plurality of negative electrode tabs (portion 3c) is electrically connected to a belt-shaped negative electrode terminal 6. A tip of the belt-shaped negative electrode terminal 6 is drawn outward from a container member 2.

In addition, although not shown, the positive electrode current collector 5a of each positive electrode 5 includes a portion on one side where the positive electrode active material-containing layer 5b is not carried on any surfaces. This portion acts as a positive electrode tab. Like the negative electrode tab (portion 3c), the positive electrode tab does not overlap the negative electrode 3. In addition, the positive electrode tab is positioned on the opposite side of the electrode group 1 with respect to the negative electrode tab (portion 3c). The positive electrode tab is electrically connected to a belt-shaped positive electrode terminal 7. A tip of the belt-shaped positive electrode terminal 7 is positioned on the opposite side to the negative electrode terminal 6 and is drawn outward from the container member 2.

The secondary battery according to the second approach includes the negative electrode according to the first approach. Thus, the secondary battery according to the second approach can exhibit excellent life characteristics in high-temperature environments.

### (Third Approach)

According to the third approach, a battery module is provided. The battery module according to the third approach is equipped with a plurality of the secondary batteries according to the second approach.

In the battery module according to the approach, individual unit cells may be electrically connected in series or in parallel, or may be arranged in combination of series connection and parallel connection.

Next, an example of the battery module according to the approach will be described with reference to the drawings.

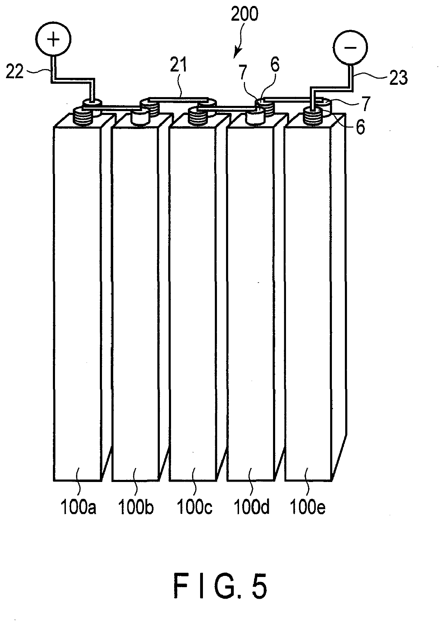

FIG. 5 is a perspective view schematically showing an example of the battery module according to the approach. The battery module 200 shown in FIG. 5 includes five unit cells 100a to 100e, four bus bars 21, a positive electrode-side lead 22, and a negative electrode-side lead 23. Each of the five unit cells 100a to 100e is the secondary battery according to the second approach.

The busbar 21 connects a negative electrode terminal 6 of a single unit cell 100a to a positive electrode terminal 7 of an adjacently positioned unit cell 100b. In this way, the five unit cells 100a to 100e are connected in series by the four bus bars 21. That is, the battery module 200 shown in FIG. 5 is a battery module of five in-series connection. Although an example is not illustrated, in a battery module containing a plurality of unit cells electrically connected in parallel, the plurality of unit cells may be electrically connected by connecting the plurality of negative electrode terminals to each other with busbars and also connecting the plurality of positive electrode terminals to each other with busbars, for example.

The positive electrode terminal 7 of at least one battery among the five unit cells 100a to 100e is electrically connected to a positive electrode lead 22 for external connection. Also, the negative electrode terminal 6 of at least one battery among the five unit cells 100a to 100e is electrically connected to a negative electrode lead 23 for external connection.

A battery module according to a third approach includes the secondary battery according to the second approach. Accordingly, the battery module according to the third approach can exhibit excellent life characteristics in high-temperature environments.

### (Fourth Approach)

According to the fourth approach, a battery pack is provided. The battery pack includes the battery module according to the third approach. The battery pack may also be equipped with a single secondary battery according to the second approach instead of the battery module according to the third approach.

The battery pack according to the approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of a motive force of vehicles such as automobiles) is provided to the battery pack via the external power distribution terminal.

Next, an example of a battery pack according to the approach will be described with reference to the drawings.

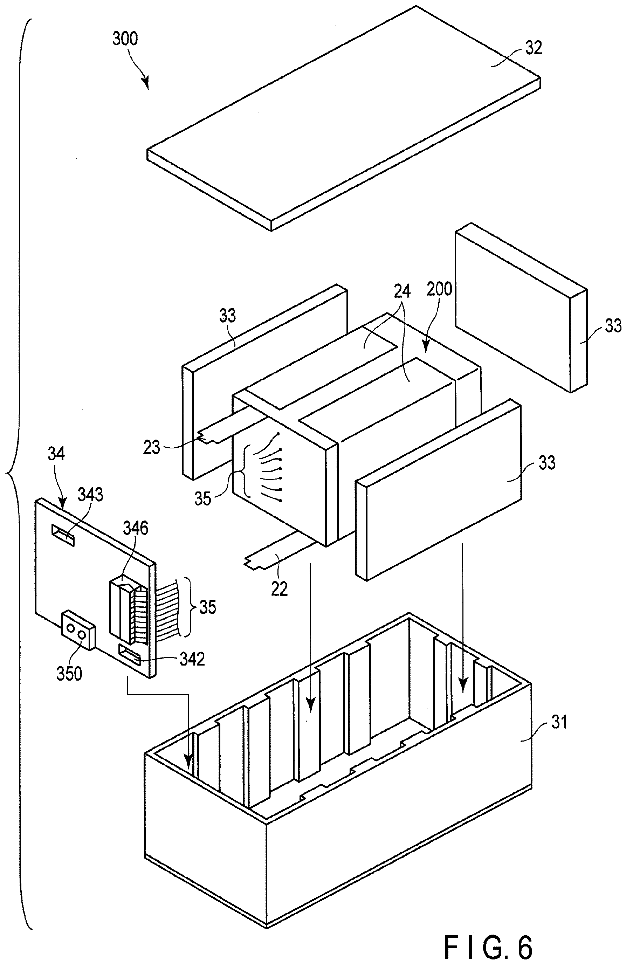

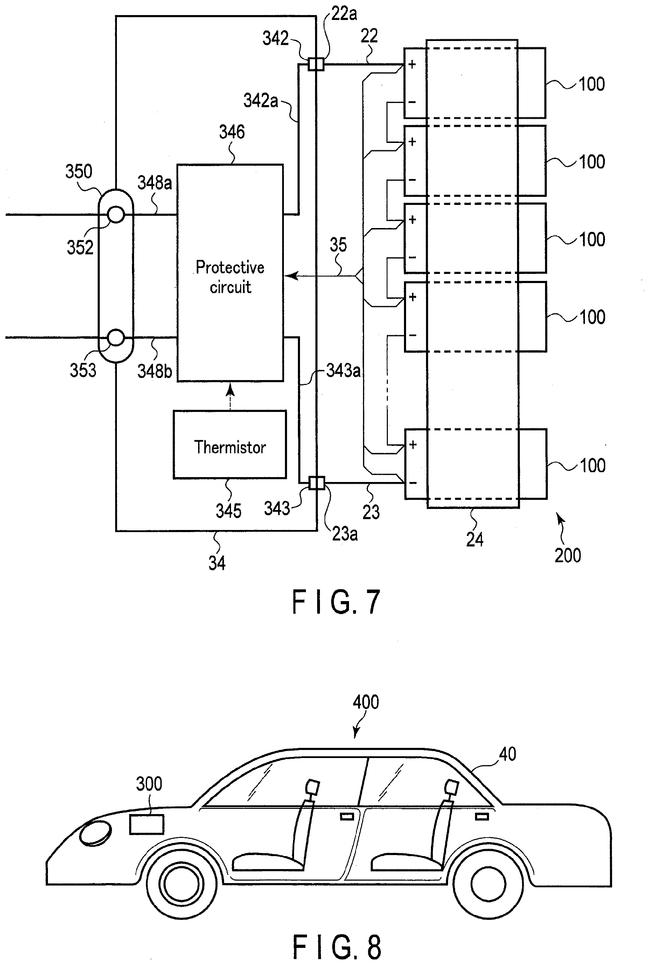

FIG. 6 is an exploded perspective view schematically showing an example of the battery pack according to the approach. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

A housing container 31 shown in FIG. 6 is a bottomed-square-shaped container having a rectangular bottom surface. The housing container 31 is configured to house protective sheet 33, a battery module 200, a printed wiring board 34, and wires 35. A lid 32 has a rectangular shape. The lid 32 covers the housing container 31 to house the battery module 200 and the like. Although not shown, opening(s) or connection terminal(s) for connecting to external device(s) and the like are provided on the housing container 31 and lid 32.

The battery module 200 includes plural unit cells 100, a positive electrode-side lead 22, a negative electrode-side lead 23, and an adhesive tape 24.

At least one in the plurality of unit cells 100 is a secondary battery according to the second approach. Each unit cell 100 in the plurality of unit cells 100 is electrically connected in series, as shown in FIG. 7. The plurality of unit cells 100 may alternatively be electrically connected in parallel, or connected in a combination of in-series connection and in-parallel connection. If the plurality of unit cells 100 is connected in parallel, the battery capacity increases as compared to a case where they are connected in series.

The adhesive tape 24 fastens the plural unit cells 100. The plural unit cells 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural unit cells 100.

One terminal of a positive electrode lead 22 is connected to a battery module 200. One terminal of the positive electrode lead 22 is electrically connected to the positive electrode of one or more unit cells 100. One terminal of a negative electrode lead 23 is connected to the battery module 200. One terminal of the negative electrode lead 23 is electrically connected to the negative electrode of one or more unit cells 100.

The printed wiring board 34 is arranged on the inner surface of the housing container 31 along the short side direction. The printed wiring board 34 includes a positive electrode connector 342, a negative electrode connector 343, a thermistor 345, a protective circuit 346, wirings 342a and 343a, an external power distribution terminal 350, a plus-side wire (positive-side wire) 348a, and a minus-side wire (negative-side wire) 348b. One principal surface of the printed wiring board 34 faces one side surface of the battery module 200. An insulating plate (not shown) is disposed in between the printed wiring board 34 and the battery module 200.

The other terminal 22a of the positive electrode lead 22 is electrically connected to a positive electrode connector 342. The other terminal 23a of the negative electrode lead 23 is electrically connected to a negative electrode connector 343.

The thermistor 345 is fixed to one principal surface of the printed wiring board 34. The thermistor 345 detects the temperature of each unit cell 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive side terminal 352 and a negative side terminal 353.

The protective circuit 346 is fixed to the other principal surface of the printed wiring board 34. The protective circuit 346 is connected to the positive side terminal 352 via the plus-side wire 348a. The protective circuit 346 is connected to the negative side terminal 353 via the minus-side wire 348b. In addition, the protective circuit 346 is electrically connected to the positive electrode connector 342 via the wiring 342a. The protective circuit 346 is electrically connected to the negative electrode connector 343 via the wiring 343a. Furthermore, the protective circuit 346 is electrically connected to each unit cell 100 in the plurality of unit cells 100 via the wires 35.

The protective sheets 33 are arranged on both inner surfaces of the housing container 31 along the long side direction and on one inner surface of the housing container 31 along the short side direction facing the printed wiring board 34 through the battery module 200. The protective sheet 33 is made of, for example, resin or rubber.

The protective circuit 346 controls charging and discharging of the plurality of unit cells 100. The protective circuit 346 is also configured to cut off electric connection between the protective circuit 346 and the external power distribution terminal 350 (the positive side terminal 352 and the negative side terminal 353) to the external devices, based on detection signals transmitted from the thermistor 345 or detection signals transmitted from each unit cell 100 or the battery module 200.

An example of the detection signal transmitted from the thermistor 345 is a signal indicating that the temperature of the unit cell(s) 100 is detected to be a predetermined temperature or more. An example of the detection signal transmitted from each unit cell 100 or the battery module 200 is a signal indicating detection of over-charge, over-discharge, and overcurrent of the unit cell(s) 100. When detecting over-charge or the like for each of the unit cells 100, the battery voltage may be detected, or a positive electrode potential or negative electrode potential may be detected. In the latter case, a lithium electrode to be used as a reference electrode may be inserted into each unit cell 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include a plurality of battery modules 200. In this case, the plurality of battery modules 200 may be connected in series, in parallel, or connected in a combination of in-series connection and in-parallel connection. The printed wiring board 34 and the wires 35 may be omitted. In this case, the positive electrode lead 22 and the negative electrode lead 23 may be used as the positive side terminal and the negative side terminal of the external power distribution terminal, respectively.

Such a battery pack is used for, for example, an application required to have the excellent cycle performance when a large current is taken out. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

A battery pack according to a fourth approach includes the secondary battery according to the second approach or the battery module according to the third approach. Thus, according to the fourth approach, it is possible to provide a battery pack including a secondary battery or a battery module that can achieve excellent life characteristics in high-temperature environments.

### (Fifth Approach)

According to the fifth approach, a vehicle is provided. The vehicle includes the battery pack according to the fourth approach.

In a vehicle according to the fifth approach, the battery pack is configured, for example, to recover regenerative energy from motive force of the vehicle. The vehicle may include a mechanism configured to convert kinetic energy of the vehicle into regenerative energy.

Examples of the vehicle according to the fifth approach include two- to four-wheeled hybrid electric automobiles, two- to four-wheeled electric automobiles, electric assist bicycles, and railway cars.

In the vehicle according to the fifth approach, the installing position of the battery pack is not particularly limited. For example, the battery pack may be installed in the engine compartment of the vehicle, in rear parts of the vehicle, or under seats.

A plurality of battery packs is loaded on the vehicle according to the fifth approach. In this case, the batteries included in each of the battery packs may be electrically connected to each other in series, in parallel, or in a combination of in-series connection and in-parallel connection. For example, in the case where each battery pack includes a battery module, the battery modules may be electrically connected to each other in series, in parallel, or in a combination of in-series connection and in-parallel connection. Alternatively, in the case where each battery pack includes a single battery, each of the batteries may be electrically connected to each other in series, in parallel, or in a combination of in-series connection and in-parallel connection.

Next, one example of the vehicle according to the fifth approach will be described with reference to the drawings.

FIG. 8 is a partially transparent diagram schematically illustrating one example of a vehicle according to the approach.

A vehicle 400 illustrated in FIG. 8 includes a vehicle body 40 and a battery pack 300 according to the approach. In the example illustrated in FIG. 8, the vehicle 400 is a four-wheeled automobile.

A plurality of the battery packs 300 may be loaded on the vehicle 400. In this case, the batteries included in the battery packs 300 (for example, unit cell or battery modules) may be connected in series, connected in parallel, or connected in a combination of in-series connection and in-parallel connection.

In FIG. 8, the battery pack 300 is installed in an engine compartment located at the front of the vehicle body 40. As described above, the battery pack 300 may be installed in rear sections of the vehicle body 40, or under a seat. The battery pack 300 may be used as a power source of the vehicle 400. In addition, the battery pack 300 can recover regenerative energy of a motive force of the vehicle 400.

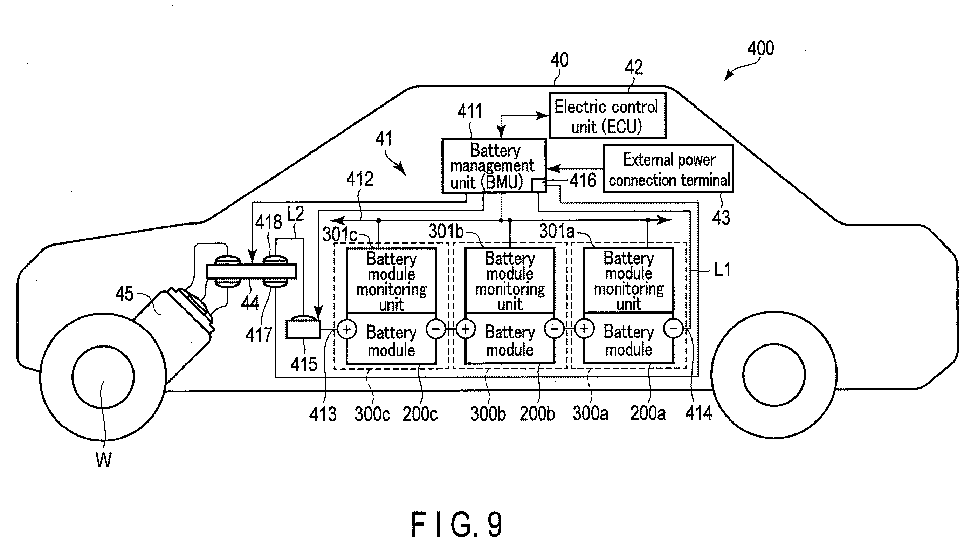

Next, an approach of the vehicle according to the fifth approach will be described with reference to FIG. 9.

FIG. 9 is a diagram schematically illustrating one example of a control system related to an electrical system in the vehicle according to the fifth approach. The vehicle 400 illustrated in FIG. 9 is an electric automobile.

The vehicle 400, shown in FIG. 9, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

A battery pack 300a is provided with a battery module 200a and a battery module monitoring apparatus 301a (for example, voltage temperature monitoring (VTM)). A battery pack 300b is provided with a battery module 200b and a battery module monitoring apparatus 301b. A battery pack 300c is provided with a battery module 200c and a battery module monitoring apparatus 301c. The battery packs 300a to 300c are battery packs similar to the battery pack 300 described earlier, and the battery modules 200a to 200c are battery modules similar to the battery module 200 described earlier. The battery modules 200a to 200c are electrically connected in series. The battery packs 300a, 300b, and 300c are removable independently of each other, and each can be replaced with a different battery pack 300.

Each of the battery modules 200a to 200c includes plural battery cells connected in series. At least one of the plural battery cells is the secondary battery according to the second approach. The battery modules 200a to 200c each perform charging and discharging via a positive electrode terminal 413 and a negative electrode terminal 414.

A battery management apparatus 411 communicates with the battery module monitoring apparatus 301a to 301c, and collects information related to the voltage, temperature, and the like for each of the unit cells 100 included in the battery modules 200a to 200c included in the vehicle power source 41. With this arrangement, the battery management apparatus 411 collects information related to the maintenance of the vehicle power source 41.

The battery management apparatus 411 and the battery module monitoring apparatus 301a to 301c are connected via a communication bus 412. In the communication bus 412, a set of communication wires are shared with a plurality of nodes (the battery management apparatus 411 and one or more of the battery module monitoring apparatus 301a to 301c). The communication bus 412 is a communication bus, for example, configured in accordance with the controller area network (CAN) standard.

The battery module monitoring units 301a to 301c measure a voltage and a temperature of each battery cell in the battery modules 200a to 200c based on commands from the battery management unit 411. It is possible, however, to measure the temperatures only at several points per battery module, and the temperatures of all of the battery cells need not be measured.

The vehicle power source 41 can also have an electromagnetic contactor (for example, a switch apparatus 415 illustrated in FIG. 9) that switches the presence or absence of an electrical connection between a positive electrode terminal 413 and a negative electrode terminal 414. The switch apparatus 415 includes a pre-charge switch (not illustrated) that turns on when the battery modules 200a to 200c are charged, and a main switch (not illustrated) that turns on when the output from the battery modules 200a to 200c is supplied to the load. Each of the pre-charge switch and the main switch is provided with a relay circuit (not illustrated) that switches on or off according to a signal supplied to a coil disposed near a switching element. The electromagnetic contactor such as the switch apparatus 415 is controlled according to of control signals from the battery management apparatus 411 or the vehicle ECU 42 that controls the entire operation of the vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management apparatus 411, or the vehicle ECU 42 which controls the entire operation of the vehicle. By controlling the inverter 44, the output voltage from the inverter 44 is adjusted.

The drive motor 45 is rotated by electric power supplied from the inverter 44. The driving force produced by the rotation of the drive motor 45 is transmitted to an axle (or axles) and drive wheels W via a differential gear unit for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connection line L1 is connected to the negative electrode terminal 414 of the vehicle power source 41. The other terminal of the connection line L1 is connected to a negative electrode input terminal 417 of the inverter 44. On the connection line L1, a current detector (current detection circuit) 416 is provided inside the battery management apparatus 411 between the negative electrode terminal 414 and the negative electrode input terminal 417.

One terminal of a connection line L2 is connected to the positive electrode terminal 413 of the vehicle power source 41. The other terminal of the connection line L2 is connected to a positive electrode input terminal 418 of the inverter 44. On the connection line L2, the switch apparatus 415 is provided between the positive electrode terminal 413 and the positive electrode input terminal 418.

The external terminal 43 is connected to the battery management apparatus 411. The external terminal 43 can be connected to, for example, an external power source.

The vehicle ECU 42 cooperatively controls the vehicle power source 41, the switch apparatus 415, the inverter 44, and the like together with other management apparatus and control apparatus, including the battery management apparatus 411, in response to operation input from a driver or the like. By the cooperative control by the vehicle ECU 42 and the like, the output of electric power from the vehicle power source 41, the charging of the vehicle power source 41, and the like are controlled, and the vehicle 400 is managed as a whole. Data related to the maintenance of the vehicle power source 41, such as the remaining capacity of the vehicle power source 41, is transferred between the battery management apparatus 411 and the vehicle ECU 42 by a communication line.

A vehicle according to a fifth approach includes the battery pack according to the fourth approach. Thus, according to the fifth approach, it is possible to provide a vehicle including a battery pack capable of achieving excellent life characteristics in high-temperature environments.

### [Examples]

Although Examples will be described hereinafter, the approaches are not limited to Examples to be described hereinafter.

### (Example 1)

A secondary battery was manufactured in accordance with the following procedure.

### <Preparation of Positive Electrode>

A lithium nickel composite oxide (LiNi_{0.5}Co_{0.2}Mn_{0.3}O₂) powder was prepared as a positive electrode active material. Acetylene black was prepared as a conductive agent. Polyvinylidene fluoride (PVdF) was prepared as a binder. Next, the positive electrode active material, the conductive agent, and the binder were added to N-methylpyrrolidone (NMP) in a ratio of 90 parts by weight : 10 parts by weight : 10 parts by weight and mixed to prepare a positive electrode slurry. This positive electrode slurry was applied to both surfaces of a current collector made of an aluminum foil having a thickness of 15 µm. Next, the coating film was dried in a constant temperature bath at 120°C and pressed to obtain a positive electrode.

### <Preparation of Negative Electrode>

As a negative electrode active material, niobium titanium composite oxide (Nb₂TiO₇) powder was prepared. The average secondary particle diameter of the niobium titanium composite oxide was 7.5 µm. The specific surface area of the niobium titanium composite oxide was 4.0 m²/g. In addition, acetylene black was prepared as a conductive agent, and polyvinylidene fluoride (PVdF) was prepared as a binder. Next, the negative electrode active material, the conductive agent, and the binder were added to N-methylpyrrolidone (NMP) in proportions of 90 parts by weight : 10 parts by weight : 10 parts by weight and mixed to prepare a negative electrode slurry. This negative electrode slurry was applied to both surfaces of a current collector made of aluminum foil of 15 µm in thickness. Then, the coating film was dried in a constant temperature bath at 120°C, and pressed to obtain a negative electrode.

### <Preparation of Electrode Group>

Two non-woven fabrics made of polyethylene of 25 µm in thickness were prepared as separators. Then, the positive electrode, the separator, the negative electrode, and the separator were stacked in this order to obtain a staked body. Then, this stacked body was spirally wound. This wound body was subjected to hot press at 80°C, thereby preparing a flattened electrode group.

### <Storage of Electrode Group>

Next, a container was prepared which was made of a laminate film having a three-layer structure of nylon layer/aluminum layer/polyethylene layer and having 0.1 mm in thickness. The electrode group prepared previously was housed in this container. Then, with the peripheral edge of the container partially opened, the inside of the container was dried in a vacuum at 80°C for 16 hours.

### <Preparation of Liquid Nonaqueous Electrolyte>

LiPF₆ was dissolved as an electrolyte at a concentration of 1 mol/L in a mixed solvent of propylene carbonate (PC) and diethyl carbonate (DEC) (1 : 2 in volume ratio). Furthermore, 1,3-propane sultone as a sulfur-containing compound was dissolved such that the concentration thereof in the nonaqueous electrolyte was 1% by weight. Thus, a liquid nonaqueous electrolyte was obtained. The preparation of the nonaqueous electrolyte was performed in an argon box.

### <Preparation of Battery>

The nonaqueous electrolytic solution was injected into the container containing the electrode group. Then, the opened part of the peripheral edge of the container was heat-sealed to seal the container. Thus, a battery was obtained whose outer dimension not including a tab part was 11 cm × 8 cm × 0.3 cm and inner dimension (sealed part dimension) was 9 cm × 7 cm × 0.25 cm.

### <First Charge>

The battery was subjected to first charge in accordance with the following procedure under an environment at 25°C. First, the battery was charged with a constant current (CC) of 0.2C until reaching a voltage of 3 V. Then, the battery was charged at a constant voltage (CV) of 3 V. The constant-voltage charge was terminated when the total time of the constant-current charge and constant-voltage charge reached 10 hours. Furthermore, in the constant-voltage charge, the conditions were adjusted such that the charge termination potential of the negative electrode in the first charge was 1.25 V (vs. Li/Li⁺).

### <First Discharge>

Next, the battery was discharged with a constant current (CC) of 0.2C under an environment at 25°C until the voltage reached 1.5 V.

### <Post Treatment>

Next, the battery was charged with a constant current (CC) of 0.2C under an environment at 25°C until reaching a voltage of 3 V. Then, the battery was charged with a constant voltage (CV) of 3 V until the current value reached 1/20C. In other words, the battery was subjected to constant-current constant-voltage (CCCV) charge. As a result, the SOC of the battery was 100%. This battery was placed in a constant temperature bath at 80°C, and kept for 24 hours. Thereafter, the battery was placed in an argon box, and after gas release, subjected to heat sealing again.

In this way, a secondary battery according to Example 1 was prepared.

### (Examples 2 to 6)

Secondary batteries were prepared in the same manner as in Example 1, except that the concentration of 1,3-propane sultone in the nonaqueous electrolyte was changed to the concentrations shown in Table 1 below.

### (Example 7)

A secondary battery was prepared in the same manner as in Example 3, except that the temperature in the constant temperature bath during the post-treatment was changed to 60°C.

### (Example 8)

A secondary battery was prepared in the same manner as in Example 3, except that NbCl₅ was added in the amount of 100 mg/L in preparing the nonaqueous electrolyte.

### (Example 9)

A secondary battery was prepared in the same manner as in Example 1, except that 1,3-propene sultone was used as the sulfur-containing compound.

### (Example 10)

A secondary battery was prepared in the same manner as in Example 1, except that 1,4-butane sultone was used as the sulfur-containing compound.

### (Example 11)

A secondary battery was prepared in the same manner as in Example 3, except that LiFSI was used as the sulfur-containing compound. Futhermore, the amount of LiPF₆ added was reduced such that the lithium ion concentration in the electrolyte was 1 M.

### (Example 12)

A secondary battery was prepared in the same manner as in Example 11, except that the concentration of LiFSI in the nonaqueous electrolyte was changed to 5% by weight. Futhermore, the amount of LiPF₆ added was reduced such that the lithium ion concentration in the electrolyte was 1 M.

### (Example 13)

A secondary battery was prepared in the same manner as in Example 11, except that the temperature in the constant temperature bath during the post treatment was changed to 60°C.

### (Example 14)

A secondary battery was prepared in the same manner as in Example 11, except for changing the temperature in the constant temperature bath during the post-treatment to 80°C and changing the holding time to 72 hours.

### (Example 15)

A secondary battery was prepared in the same manner as in Example 1, except that a Nb_{1.97}TiO₇ powder whose average secondary particle diameter of 7.1 µm was used as the negative electrode active material.

### (Comparative Example 1)

A secondary battery was prepared in the same manner as in Example 1, except that the sulfur-containing compound was not added to the nonaqueous electrolyte.

### (Comparative Example 2)

A secondary battery before initial charge was prepared in the same manner as in Example 1, except for using graphite as the negative electrode active material and changing the concentration of 1,3-propane sultone in the nonaqueous electrolyte to 0.5% by weight. Furthermore, the secondary battery was subjected to initial charge and post treatment in the same manner as in Example 1 except for changing the charging voltage during the first charge and constant-current charge for the secondary battery to 4.25 V, thereby preparing a secondary battery according to Comparative Example 2.

### (Comparative Example 3)

A secondary battery was prepared in the same manner as in Example 1, except that sulfolane was used instead of 1,3-propane sultone.

### <Direct Current (DC: Direct Current) Resistance Measurement>

Each of the secondary batteries prepared as examples and comparative examples was subjected to a DC resistance measurement as follows, before the storage test described later.

The battery was discharged with a constant current (CC) of 0.2C until the voltage reached 1.5 V. Thereafter, the battery was charged with a constant current (CC) of 0.2C until reaching a voltage of 2.25 V. Then, the battery was charged at a constant voltage (CV) of 2.25 V until the current value reached 1/20C, thereby adjusting the state of charge of the battery to SOC 50%. The battery adjusted to SOC 50% was discharged at each constant current (CC) of 1C and 10C for 200 ms, and the DC resistance [mΩ] was determined from the difference between the voltage value and the current value at this time. The results are shown in Table 1 below.

### <Storage Test>

Each of the secondary batteries prepared as examples and comparative examples was subjected to a storage test as follows.

The battery was charged with a constant current (CC) of 0.2C until reaching a voltage of 3V. Then, the battery was charged with a constant voltage (CV) of 3 V, until the current value reached 1/20C. In other words, the battery was subjected to constant-current constant-voltage (CCCV) charge, thereby adjusting the SOC to 100%. The battery having this state of charge was placed in a constant temperature bath at 55°C. The battery was taken from the constant temperature bath at 55°C every 10 days, cooled to 25°C, then subjected again to CCCV at 3 V, and placed in the constant temperature bath at 55°C. This was repeated, the battery stored in the constant temperature bath over 60 days was cooled to 25°C, the volume was measured, and the difference from the volume before the test was defined as the gas generation amount [ml]. The results are shown in Table 1. The gas generation amount serves as an index of life characteristics in a high temperature environment.

### <XPS Analysis>

Each of the secondary batteries prepared as examples and comparative examples was subjected to an XPS analysis in accordance with the method described in the approach. As a result of the XPS on the surface of the negative electrode active material-containing layer, the peak heights of the first peak and second peak in the obtained spectral data were each calculated, and the ratio (P2/P1) of the peak height P2 of the second peak to the peak height P1 of the first peak was calculated. The results are shown in Table 1.

Furthermore, as a result of the XPS on the positive electrode active material-containing layer, whether the third peak was present in the obtained spectral data or not was checked. The results are shown in Table 1.

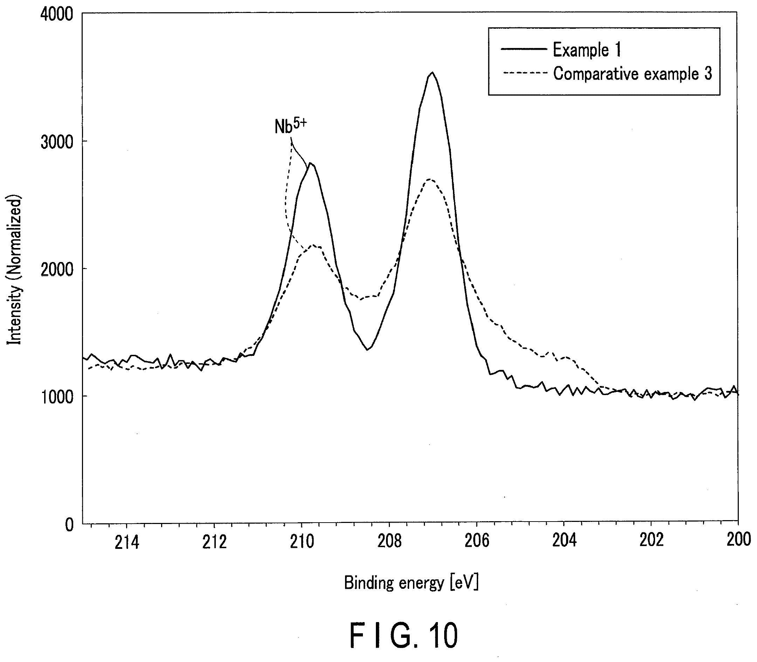

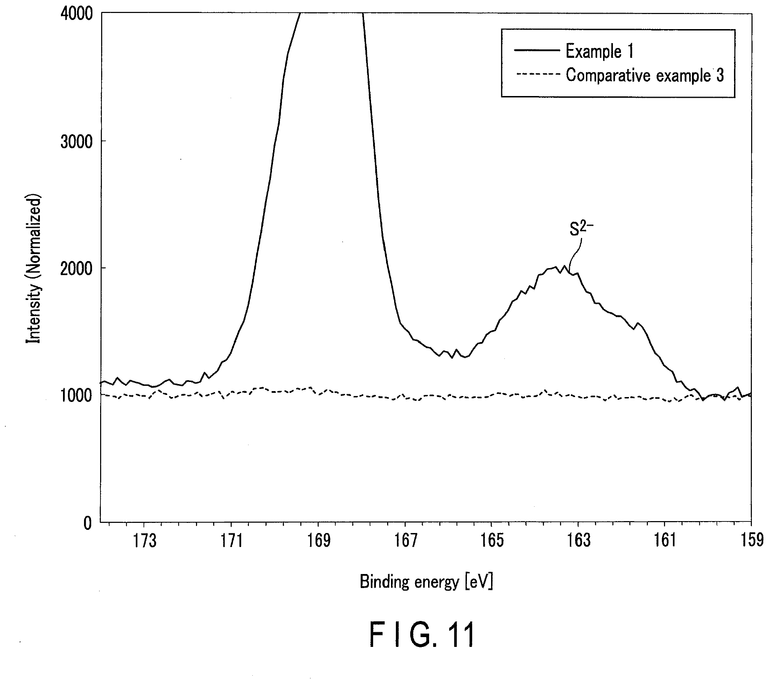

FIG. 10 is a chart showing Nb3d spectral data according to Example 1 and Comparative Example 3. FIG. 11 is a chart showing S2P spectral data according to Example 1 and Comparative Example 3. In the charts shown in FIGS. 10 and 11, the horizontal axis represents the binding energy [eV], and the vertical axis represents the intensity.

As shown in FIG. 10, regarding the first peak according to Example 1, the noise width of the baseline was about 55, and the peak height was about 1500 c/s. Note that the noise width was calculated as an average for the widths of the peak tops and peak bottoms of background noises without first and second peaks, which were measured at five random points near the first peak. The same applies to the noise widths of the other peaks. The peak height of the first peak according to Example 1 was three times or more as large as the noise width of the baseline, and it can be determined that the first peak was included in the spectral data obtained by the XPS on the negative electrode active material-containing layer surface according to Example 1. Furthermore, regarding the first peak according to Comparative Example 3, the noise width of the base line was about 34, and the peak height was about 1030 c/s. The peak height of the first peak according to Comparative Example 3 was three times or more as large as the noise width of the baseline, and it can be determined that the first peak was included in the spectral data obtained by the XPS on the negative electrode active material-containing layer surface according to Comparative Example 3.

Furthermore, as shown in FIG. 11, regarding the second peak according to Example 1, the noise width of the baseline was about 41, and the peak height was about 1000 c/s. The peak height of the second peak according to Example 1 was three times or more as large as the noise width of the baseline, and it can be determined that the second peak was included in the spectral data obtained by the XPS on the negative electrode active material-containing layer surface according to Example 1. In addition, the second peak is, as is clear from FIG. 11, not or hardly included in the spectral data obtained by the XPS on the negative electrode active material-containing layer surface according to Comparative Example 3.

The peak height ratio (P2/P1) according to Example 1 was calculated from the obtained results, and the ratio was 0.67. Furthermore, it was not possible to calculate the peak height ratio according to Comparative Example 3, because it was not possible to detect the second peak.

### <Inductively Coupled Plasma (ICP: Inductively Coupled Plasma) Analysis>

Each of the secondary batteries prepared as examples and comparative examples was subjected to an ICP analysis to check the niobium ion concentration in the electrolyte.

Specifically, first, the battery was discharged with a constant current (CC) of 0.2C until the voltage reached 1.5 V. Next, this battery was placed in an argon box, the edge of the laminate cell was cut open with scissors, and the electrolytic solution was collected. The electrolytic solution was analyzed by ICP emission spectroscopy to measure the niobium ion concentration in the electrolytic solution. The results are shown in Table 1 below.

In Table 1, the column of "Peak Height Ratio in Negative Electrode Surface Analysis" indicates that the ratio is less than 0.01 in the example in which the second peak was not detected. In other words, in Comparative Examples 1 to 3, the ratio was less than 0.01. The column of "Niobium Ion Concentration" shows the niobium ion concentration in the electrolyte included in the secondary battery according to each example, which was measured by the above-described ICP emission spectroscopy. The column of "DC Resistance Value" shows the result of the DC resistance measurement before the storage test. The column of "Gas Generation Amount" shows the amount of gas generation conducted in accordance with the storage test mentioned above.

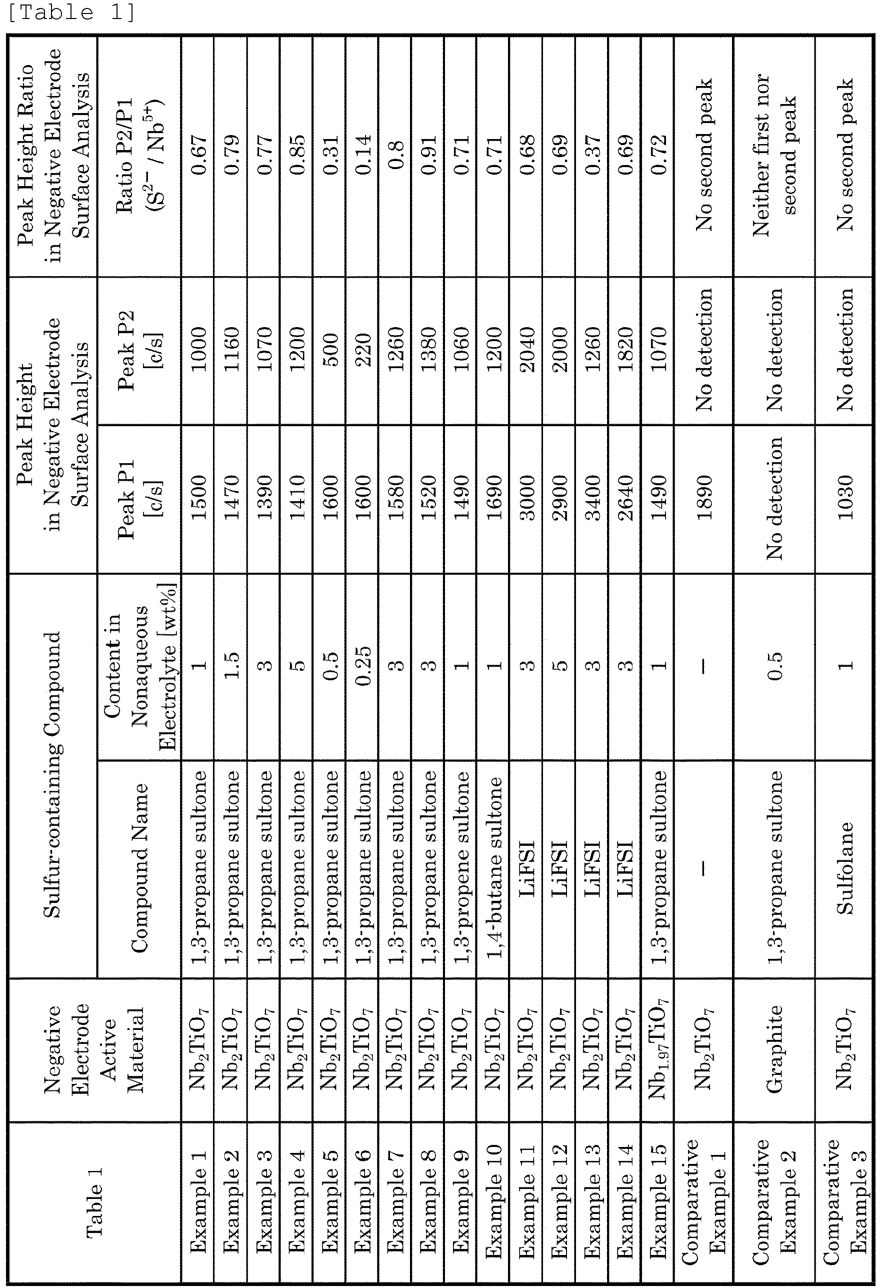

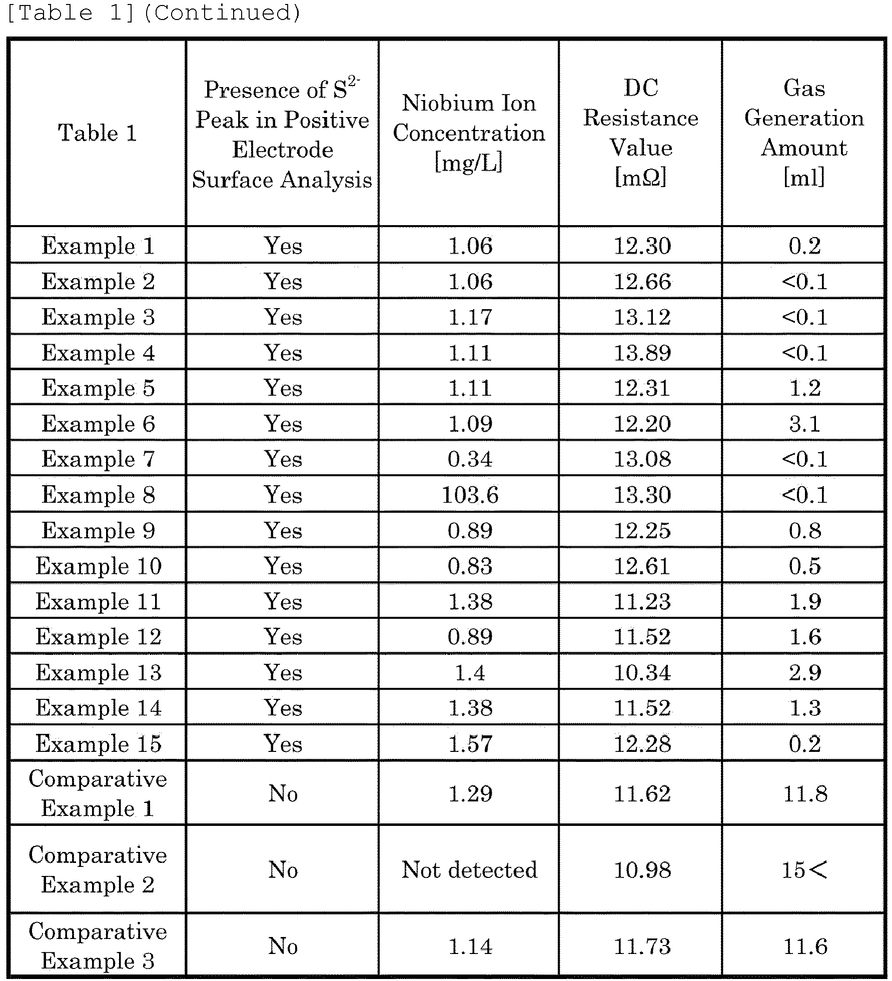

From Table 1, the following can be understood.

Examples 1 to 15 in which the ratio of the peak height P2 of the second peak with a peak top appearing in the range of 160 eV to 165 eV to the peak height P1 of the first peak with a peak top appearing in the range of 208 eV to 210 eV falls within the range of 0.05 to 2 were all capable of significantly suppressing the gas generation as compared with Comparative Examples 1 to 3. Among these, the secondary batteries according to Examples 11 to 14 with the use of LiFSI (lithium bis (fluorosulfonyl)imide) as the sulfur-containing compound included in the electrolyte were not only capable of sufficiently reducing the gas generation amount, but also extremely low in DC resistance. That is, the secondary batteries according to Examples 11 to 14 were excellent not only in the life characteristics in a high temperature environment, but also in input/output characteristics.

In the examples in which the peak height ratio was high, for example, Examples 4, 7, and 8, the DC resistance value tends to be high, and it is thus assumed that relatively thick sulfur-containing coatings were formed.

As presented in Examples 1 to 6 and Examples 11 to 12, it is determined that with the increase in the content of the sulfur-containing compound contained in the nonaqueous electrolyte, the peak height ratio is increased, and the gas generation can be further suppressed, and the DC resistance value is also increased.

From the comparison between Examples 3 and 8, it can be seen that with the addition of Nb⁵⁺ ions into the nonaqueous electrolyte in advance, a relatively thick sulfur-containing coating is formed, thus increasing the peak height ratio.

From the comparison between Examples 11 and 13, it is determined that in the case of using the sulfur-containing imide compound, the peak height ratio is significantly decreased when the temperature during the post-treatment is lowered. In Example 13, however, it was possible to achieve a low DC resistance value while sufficiently suppressing the gas generation.

From the comparison between Examples 11 and 14, it is determined that in the case of using the sulfur-containing imide compound, the gas generation amount is decreased when the post-treatment time is extended.

As represented in Comparative Examples 1 and 3, for example, in the case where the second peak was not detected, gas was generated in large amounts. This is believed to be mainly because the insufficient amount of the sulfur-containing coating formed. As represented in Comparative Example 3, even if the nonaqueous electrolyte contains the sulfur-containing compound, the gas generation fails to be significantly suppressed in the case where the peak height ratio is less than 0.05. More specifically, the life characteristics in a high temperature environment are inferior.

Moreover, as represented in Comparative Example 2, it is determined that in the case where the negative electrode active material was graphite, the first peak and the second peak were not detected, and a large amount of gas was generated in the storage test. In comparison between Comparative Example 2 and Example 5, the secondary battery according to Example 5 was capable of significantly suppressing the gas generation, although the content of the sulfur-containing compound in the nonaqueous electrolyte was equal to that in Comparative Example 2.

According to at least one approaches and examples described above, a negative electrode is provided. The negative electrode includes a negative electrode active material-containing layer including a niobium titanium composite oxide and a sulfur-containing coating. Spectral data obtained by X-ray photoelectron spectroscopy on the surface of the negative electrode active material-containing layer includes a first peak with a peak top existing in the range of 208 eV to 210 eV and a second peak with a peak top existing in the range of 160 eV to 165 eV. The ratio (P2/P1) of the peak height P2 of the second peak to the peak height P1 of the first peak falls within the range of 0.05 to 2.

With this negative electrode, a secondary battery can be achieved which can exhibit excellent life characteristics in a high temperature environment.

The present disclosure also encompasses the following approaches:
1. A negative electrode (3) comprising
   a negative electrode active material-containing layer (3b) comprising a niobium titanium composite oxide and a sulfur-containing coating,
   wherein spectral data obtained by X-ray photoelectron spectroscopy on a surface of the negative electrode active material-containing layer (3b) comprises a first peak with a peak top existing in a range of 208 eV to 210 eV, and a second peak with a peak top existing in a range of 160 eV to 165 eV, and
   a ratio (P2/P1) of a peak height P2 of the second peak to a peak height P1 of the first peak falls within a range of 0.05 to 2.
2. The negative electrode (3) according to clause 1, wherein the peak height P1 of the first peak falls within a range of 300 c/s to 10,000 c/s.
3. The negative electrode (3) according to clause 1 or 2, wherein the peak height P2 of the second peak falls within a range of 100 c/s to 10,000 c/s.
4. The negative electrode (3) according to any one of clauses 1 to 3,
   wherein the niobium titanium composite oxide is at least one selected from the group consisting of a composite oxide represented by a general formula LiₓTi_{1-y}M1_{y}Nb_{2-z}M2_{z}O_{7+δ} and a composite oxide represented by a general formula LiₓTi_{1-y}M3_{y+z}Nb_{2-z}O_{7-δ},
   the M1 is at least one selected from the group consisting of Zr, Si, and Sn, the M2 is at least one selected from the group consisting of V, Ta, and Bi, and the M3 is at least one selected from the group consisting of Mg, Fe, Ni, Co, W, Ta, and Mo, and
   the x satisfies 0 ≤ x ≤ 5, the y satisfies 0 ≤ y < 1, the z satisfies 0 ≤ z < 2, and the δ satisfies -0.3 ≤ δ ≤ 0.3.
5. A secondary battery (100) comprising:
   the negative electrode (3) according to any one of clauses 1 to 4;
   a positive electrode (5); and
   an electrolyte.
6. The secondary battery (100) according to clause 5,
   wherein the electrolyte comprises at least one sulfur-containing compound selected from a sultone compound and imide compounds containing a sulfur atom.
7. The secondary battery (100) according to clause 6,
   wherein the sulfur-containing compound comprises the sultone compound, and
   the sultone compound is at least one selected from the group consisting of 1,3-propane sultone, 1,3-propene sultone, 1,4-butane sultone, and 2,4-butane sultone.
8. The secondary battery (100) according to clause 6 or 7,
   wherein the sulfur-containing compound comprises the imide compound, and
   the imide compound is at least one selected from lithium bis(trifluoromethanesulfonyl)imide and lithium bis(fluorosulfonyl)imide.
9. The secondary battery (100) according to any one of clauses 5 to 8,
   wherein the positive electrode (5) comprises a positive electrode active material-containing layer (5b) comprising a sulfur-containing coating, and
   spectral data obtained by X-ray photoelectron spectroscopy on the positive electrode active material-containing layer (5b) comprises a third peak with a peak top existing in a range of 160 eV to 165 eV.
10. The secondary battery (100) according to any one of clauses 5 to 9, wherein the electrolyte comprises niobium ions, and
   the niobium ion concentration falls within a range of 0.01 mg/L to 300 mg/L.
11. A battery pack (300) comprising the secondary battery (100) according to any one of clauses 5 to 10.
12. The battery pack (300) according to clause 11, further comprising:
   an external power distribution terminal (350); and
   a protective circuit (346).
13. The battery pack (300) according to clause 11 or 12, comprising a plurality of the secondary battery (100),
   wherein the secondary batteries (100) are electrically connected in series, in parallel, or in series and parallel in combination.
14. A vehicle (400) comprising the battery pack (300) according to any one of clauses 11 to 13.
15. The vehicle (400) according to clause 14, comprising a mechanism configured to convert kinetic energy of the vehicle (400) into regenerative energy.

While certain approaches have been described, these approaches have been presented by way of example only, and are not intended to limit the scope of the claims. Indeed, the novel negative electrodes described herein may be embodied in a variety of other forms; furthermore, various omissions, substitutions and changes in the form of the negative electrodes described herein may be made.

## Claims

1. A negative electrode (3) comprising
a negative electrode active material-containing layer (3b) comprising a niobium titanium composite oxide and a sulfur-containing coating,
wherein spectral data obtained by X-ray photoelectron spectroscopy on a surface of the negative electrode active material-containing layer (3b) comprises a first peak with a peak top existing in a range of 208 eV to 210 eV, and a second peak with a peak top existing in a range of 160 eV to 165 eV, and
a ratio (P2/P1) of a peak height P2 of the second peak to a peak height P1 of the first peak falls within a range of 0.05 to 2.

2. The negative electrode (3) according to claim 1, wherein the peak height P1 of the first peak falls within a range of 300 c/s to 10,000 c/s.

3. The negative electrode (3) according to claim 1 or 2, wherein the peak height P2 of the second peak falls within a range of 100 c/s to 10,000 c/s.

4. The negative electrode (3) according to any one of claims 1 to 3,
wherein the niobium titanium composite oxide is at least one selected from the group consisting of a composite oxide represented by a general formula LiₓTi_{1-y}M1_{y}Nb_{2-z}M2_{z}O_{7+δ} and a composite oxide represented by a general formula LiₓTi_{1-y}M3_{y+z}Nb_{2-z}O_{7-δ},
the M1 is at least one selected from the group consisting of Zr, Si, and Sn, the M2 is at least one selected from the group consisting of V, Ta, and Bi, and the M3 is at least one selected from the group consisting of Mg, Fe, Ni, Co, W, Ta, and Mo, and
the x satisfies 0 ≤ x ≤ 5, the y satisfies 0 ≤ y < 1, the z satisfies 0 ≤ z < 2, and the δ satisfies -0.3 ≤ δ ≤ 0.3.

5. A secondary battery (100) comprising:
the negative electrode (3) according to any one of claims 1 to 4;
a positive electrode (5); and
an electrolyte.

6. The secondary battery (100) according to claim 5,
wherein the electrolyte comprises at least one sulfur-containing compound selected from a sultone compound and imide compounds containing a sulfur atom.

7. The secondary battery (100) according to claim 6,
wherein the sulfur-containing compound comprises the sultone compound, and
the sultone compound is at least one selected from the group consisting of 1,3-propane sultone, 1,3-propene sultone, 1,4-butane sultone, and 2,4-butane sultone.

8. The secondary battery (100) according to claim 6 or 7,
wherein the sulfur-containing compound comprises the imide compound, and
the imide compound is at least one selected from lithium bis(trifluoromethanesulfonyl)imide and lithium bis(fluorosulfonyl)imide.

9. The secondary battery (100) according to any one of claims 5 to 8,
wherein the positive electrode (5) comprises a positive electrode active material-containing layer (5b) comprising a sulfur-containing coating, and
spectral data obtained by X-ray photoelectron spectroscopy on the positive electrode active material-containing layer (5b) comprises a third peak with a peak top existing in a range of 160 eV to 165 eV.

10. The secondary battery (100) according to any one of claims 5 to 9, wherein the electrolyte comprises niobium ions, and
the niobium ion concentration falls within a range of 0.01 mg/L to 300 mg/L.

11. A battery pack (300) comprising the secondary battery (100) according to any one of claims 5 to 10.

12. The battery pack (300) according to claim 11, further comprising:
an external power distribution terminal (350); and
a protective circuit (346).

13. The battery pack (300) according to claim 11 or 12, comprising a plurality of the secondary battery (100),
wherein the secondary batteries (100) are electrically connected in series, in parallel, or in series and parallel in combination.

14. A vehicle (400) comprising the battery pack (300) according to any one of claims 11 to 13.

15. The vehicle (400) according to claim 14, comprising a mechanism configured to convert kinetic energy of the vehicle (400) into regenerative energy.
